# EUROPÄISCHE PATENTSCHRIFT

(11) **EP 1 954 777 B1**
(45) Veröffentlichungstag und Bekanntmachung des Hinweises auf die Patenterteilung: **23.09.2009**
(21) Anmeldenummer: 06806326.2
(22) Anmeldetag: 17.10.2006
(51) Int. Cl.: C09J 5/00, C09J 175/04, C09J 133/06

(54) **KLEBESTIFT MIT POLYURETHAN/POLYACRYLAT-HYBRIDDISPERSION**
ADHESIVE STICK COMPRISING POLYURETHANE/POLYACRYLATE HYBRID DISPERSION
BATON DE COLLE COMPRENANT UNE DISPERSION HYBRIDE POLYURETHANE/POLYACRYLATE

(30) Priorität: 30.11.2005 DE 102005057482
(43) Veröffentlichungstag der Anmeldung: 13.08.2008
(73) Patentinhaber: fischerwerke GmbH & Co. KG, 72178 Waldachtal (DE)
(72) Erfinder: GRÜN, Jürgen, 79268 Bötzingen (DE); SCHLENK, Christian, 79211 Denzlingen (DE); VOGEL, Martin, 79286 Glottertal (DE)
(74) Vertreter: Suchy, Ulrich Johannes
(86) Internationale Anmeldenummer: PCT/EP2006/009992
(87) Internationale Veröffentlichungsnummer: WO 2007/062720

(56) Entgegenhaltungen:
- EP-A1- 0 405 329
- EP-A2- 0 326 530
- WO-A-99/48989
- US-A- 5 604 268

## Beschreibung

Die Erfindung betrifft neue Klebestifte, beinhaltend ein oder mehrere formgebende Gerüstsubstanzen und eine Klebekomponente, sowie deren Herstellung und Verwendung.

Klebestifte, worunter nachfolgend in erster Linie (insbesondere weich) abreibbare und für die Anwendung hinreichend formstabile Klebestifte zu verstehen sind, beispielsweise solche, die in einer Hülse beweglich gelagert sind, sind bekannt. Durch Abreiben auf einer zu beklebenden Fläche können sie auf eine solche aufgetragen und zum Bekleben verwendet werden.

Derartige Klebestifte umfassen in der Klebstoffmasse einerseits Gerüstsubstanzen, die beim Abreiben in einen pastösen Zustand umgewandelt werden können und so ein Auftragen auf die mit der Klebemasse zu versehende Oberfläche, zusammen mit einer Klebekomponente, ermöglichen.

In der Regel werden als Gerüstsubstanzen Alkali- oder Ammoniumsalze aliphatischer aliphatischer Sulfon- und/oder (vorzugsweise) Carbonsäuren (oder Gemische davon), wie Myristinsäure, Palmitinsäure, Stearinsäure oder dergleichen, eingesetzt. Diese bilden nach Erwärmen (beispielsweise auf 60 ° oder mehr) eine Flüssigkeit, um dann beim Abkühlen mit anderen Komponenten der Klebemasse ein Seifengel mit einer Micellstruktur auszubilden. Beim Auftragen auf eine mit der Klebemasse zu versehende Schicht wird die Micellstruktur beinträchtigt und zerstört und dadurch die Klebemasse in einen pastösen Zustand überführt. Dadurch tritt die Wirkung der Klebekomponente in den Vordergrund, so dass ein Verkleben von Gegenständen und Materialien möglich wird. Andere Gerüstkomponenten können Reaktionsprodukte von Sorbit und Benzaldehyd, Salze substituierter Phthalsäureamide oder freie langkettige aliphatische Säuren oder deren Ester sein (vgl. DE 22 04 482, DE 26 20 721 und DE 20 54 503), oder auch Reaktionsprodukte aus aromatischen Diisocyanaten mit Mono- und/oder Dialkanolaminen (vgl. DE 24 19 067). Weitere Zusatzstoffe, wie langkettige nichtseifige Netzmittel, wurden vorgeschlagen, z.B. nach DE 22 19 697, oder auch begrenzte Mengen an Lactamen niederer Aminocarbonsäuren (siehe DE 38 96 382).

Eine Fülle von Klebekomponenten wurde bereits ausprobiert, darunter wasserdispergierbare Hochpolymere wie Polyvinylpyrrolidon (PVP) in einer wässrig-organischen Flüssigphase (vgl. DE 18 11 466), Polyurethandispersionen (vgl. EP 0 405 329 oder DE 199 08 561) oder (allerdings insbesondere nur für einfaches Kleben beispielsweise im Bürobereich) Acrylatdispersionen (vgl. DE 101 48 077).

Derartige Klebestifte bieten in der Regel für die Verklebung von Papier ausreichende Festigkeiten, doch wären vielseitig einsetzbare Klebestifte, die auch das Verkleben von anderen Materialien ermöglichen und auch sonst vorteilhafte Eigenschaften zeigen, wie erhöhte Resistenz gegen Umwelteinflüsse (z.B. Feuchtigkeit oder Hitze), preiswerte Herstellung, gute Verflüssigbarkeit bei der Herstellung, leichte Bearbeitbarkeit nach dem Abkühlen, und/oder gute Formstabilität bei guter Abreibbarkeit und guter Klebewirkung, vorzugsweise auch beim Verkleben von anderen Materialien als Papier, oder dergleichen.

Überraschend wurde nun gefunden, dass bei Verwendung von Polyurethan/Polyacrylat--Hybriddispersionen als Klebekomponente ein hervorragender Klebeeffekt gefunden werden kann und so Klebestifte erhalten werden können, welche einen oder vorzugsweise mehrere der genannten Vorteile zeigen und allgemein eine Ergänzung und Bereicherung für die bisherige Palette an Klebestiften bedeuten. Hier werden z.B. vorteilhaft die Eigenschaften der Polyurethane (Verwendbarkeit auch bei Klebung anderer Materialien als Papier) und der Polyacrylate (preiswert, aber nur eingeschränkt für Klebezwecke geeignet) so kombiniert, dass trotz des Polyacrylatanteils eine breite Verwendbarkeit, beispielsweise nicht nur zum Verkleben von Papier, resultiert, ja sogar weitere der genannten Vorteile verwirklicht werden können.

Die Erfindung betrifft daher die eingangs genannten Klebestifte, bei denen mindestens ein Teil, vorzugsweise mehr als 80 Gew.-%, der Klebekomponente aus einer Polyurethan/Polyacrylat-Hybriddispersion bestehen.

Bei den Polyurethan/Acrylat-Hybriddispersionen, die erfindungsgemäß verwendet werden, handelt es sich um Polymerdispersionen, bei denen die Polyurethan- und die Polyacrylatkomponente so miteinander umgesetzt werden, dass die Netzwerke dieser beiden Polymeranteile sich gegenseitig durchdringen (also sogenannte "interpenetrierende Netzwerke" vorliegen). Dies mag auch teilweise die besonders guten Eigenschaften der Klebestifte erklären helfen.

Die Polyurethan/Polyacrylat-Hybriddispersionen können durch Reaktion von Polyurethandispersionen mit polymerisierenden Polyacrylatvorstufen hergestellt werden (Variante a) und/oder durch zusätzliche Polymerisierung von Polyurethan-Präpolymeren mit weiteren Polyurethanvorstufen und parallel ablaufende Polymerisationvon Polyacrylatvorläufern (Variante b), wobei auch Mischungen nach beiden Varianten a) und b) hergestellter Hybriddispersionen verwendet werden können.

Zur Herstellung von den in Variante (a) zu verwendenden Polyurethandispersionen werden beispielsweise als Ausgangskomponenten mehrfunktionelle Alkohole, Aminoalkohole und/oder Amine einerseits und mehrfunktionelle Isocyanate andererseits polymerisiert, wobei zusätzlich Komponenten verwendet werden können, die entweder zusätzlich in die Kette eingebundende Bausteine ergeben, die ionische Gruppen bilden können, und/oder zusätzlich oder an Stelle solcher Gruppen hydrophile nichtionische Bestandteile enthalten können, so dass die Polymeren bei Wasserzugabe selbstdispergierend sind. Allgemeine Beschreibungen, engere bevorzugte Varianten und Beispiele, für derartige Polyurethan-Dispersionen und deren Herstellung und Ausgangsmaterialien finden sich in der EP 0 405 329 B1 sowie in der DE 199 08 561, die hier diesbezüglich der durch Bezugnahme inkorporiert werden. Dabei können auch Kettenverlängerungsmittel mit reaktionsfähigem Wasserstoff beim Aufbau der Polyurethane verwendet werden, beispielsweise wie in der EP 0 405 329 beschrieben, die hier bezüglich der darin genannten allgemeinen und speziellen Kettenverlängerungsmittel durch Bezugnahme aufgenommen wird. Polyurethan-Präpolymere können aus den genannten Komponenten in üblicher Weise erhalten werden.

Im Falle der Variante b) findet die Reaktion vorzugsweise nach Dispersion des oder der Urethanpräpolymeren und der Acrylatmonomeren in einem Lösungsmittel- oder Lösungsmittelgemisch, wie Wasser, und anschließende parallele Polymerisation statt.

Bei den Polyacrylatvorstufen handelt es sich insbesondere um Acrylatmonomeren (beispielsweise Ester der Acrylsäure, wie die Methyl- oder Ethylester) oder um andere Polyacrylatstufen, wobei ebenfalls solche Monomeren eingeschlossen sein können, die ionisierende Gruppen, wie Sulfo- oder Carboxygruppen, beinhalten, beispielsweise freie Acrylsäure, so dass eine besonders gute Dispergierbarkeit resultiert und auch Monomeren ausgewählt aus Methacrylsäure, Itaconsäure, Maleinsäure und/oder jeweils deren Alkylestern anteilig Verwendung finden können.

Die Polyurethan/Polyacrylat-Hybriddispersionen können in üblichen Lösungsmitteln oder Lösungsmittelgemischen, vorzugsweise in wässrigen Lösungsmittelgemischen, insbesondere in Wasser, dispergiert sein, und können weitere Zusätze (beispielsweise in einem Anteil von insgesamt bis zu 5 Gew.-%, bezogen auf die vollständige Hybriddispersion), wie Emulgatoren, Stabilisatoren, pH-Regulatoren (wie Amine) oder dergleichen beinhalten.

Weitere Zusätze und Hilfsmittel können der Klebemasse zugesetzt werden oder in der fertigen Klebemasse zugesetzt sein, beispielsweise Substanzen, die den leichteren Abrieb fördern, wie Aminocarbonsäuren und/oder Lactame (siehe DE 38 06 382, die hier bezüglich der genannten Verbindungen und deren bevorzugter Mengenanteile durch Bezugnahme aufgenommen wird). Als weitere Hilfsstoffe können ein oder mehrere ausgewählte aus Pigmenten, Additiven, Entschäumern, Farbstoffen, Geruchsverbesserern, Schmiermitteln, Weichmachern, Feuchtigkeitsregulatoren, weiteren Polymeren, insbesondere Tackifiern (insbesondere PVP) und/oder Haftharze zugesetzt sein, beispielsweise (bezogen auf die Gesamtmasse der Klebemasse im Klebestift) in Anteilen von jeweils bis zu höchstens 5, vorzugsweise (sofern vorhanden) 0,01 bis 2 Gew.-%, wobei vorzugsweise das Gesamtgewicht aller Zusätze bei bis zu 25 Gew.-%, beispielsweise bei 0,01 bis 20 Gew.-%, liegen kann.

Die Herstellung der Klebemasse kann erfindungsgemäß erfolgen, indem man eine Polyurethan/Polyacrylat-Hybriddispersion und gegebenenfalls ein oder mehrere weitere Zusätze und/oder Hilfsstoffe vermischt und auf erhöhte Temperatur bringt, beispielsweise im Bereich von 50 °C bis unterhalb der Siedetemperatur des Gemisches, vorzugsweise im Bereich von 50 bis 90 °C, beispielsweise, bis eine gleichmäßige Mischung entstanden ist, und anschließend oder gleichzeitig zu dieser Mischung die Gerüstsubstanzen, oder Vorstufen davon, zugibt und die Mischung homogenisiert und abkühlen lässt. Vorzugsweise kann das Abkühlen direkt nach Gießen in Formen geschehen, so dass gleich eine für das Einbringen in Hüllen für Klebestifte geeignete Form erhält.

Die Herstellung der Klebestifte erfolgt dann durch Einbringen der Klebemasse, vorzugsweise in vorgeformter Form, in geeignete Hülsen, die auch geeignete übliche Vorschubmechanismen (beispielsweise drehbar oder schiebbar ausgelegt) beinhalten und mit geeigneten Deckeln verschließbar sein können. Erfindungsgemäße Klebestifte beinhalten daher neben der Klebemasse auch derartige Komponenten.

Die Erfindung betrifft auch die Verwendung von Polyurethan/Polyacrylat-Hybriddispersionen zur Herstellung von Klebemassen, umfassend die vorstehend genannten Verfahrensschritte, sowie die erhältlichen Klebemassen selbst.

Unter "Vorstufen von Gerüstsubstanzen" sind beispielsweise freie Säuren und Laugen zu verstehen, die gemeinsam beim Mischen in geeigneten stöchiometrischen Mengen gerüstbildende Salze als Gerüstsubstanzen bilden, insbesondere aliphatische Sulfon- und/oder (insbesondere) Carbonsäuren (oder Gemische davon) und Alkalimetallhydroxide oder Ammoniumhydroxid (Ammoniak).

Der Gewichtsanteil der Gerüstsubstanzen in der fertigen Klebemasse kann insbesondere in einem Bereich von 1 bis 40 Gew.-%, vorzugsweise von 2 bis 25 Gew.-% liegen, der Anteil der Polyurethan/Polyacrylat-Hybriddispersion (einschließlich Lösungsmittel, vorzugsweise Wasser) kann insbesondere bei 5 bis 98 Gew.-%, vorzugsweise von 30 bis 90 Gew.-% liegen. Der Anteil an Polymeren als "Feststoff" in der Polyurethan/Polyacrylat-Hybriddispersion kann, bezogen auf deren Gewicht selbst, vorzugsweise bei 5 bis 75 Gew.-%, insbesondere im Bereich von 20 bis 60 Gew.-% liegen.

Vor- und nachstehend verwendete allgemeinere Ausdrücke und Definitionen können unabhängig voneinander, einzeln, zu mehreren oder alle, durch jeweils entsprechende spezifischere Ausdrücke ersetzt werden, was zu besonders bevorzugten Ausführungsformen der Erfindung führt.

Testsysteme und -methoden für die Klebestifte nach der Erfindung werden in und unterhalb der Beispiele beschrieben, daneben können weitere Parameter, wie Abrieb, Penetration, Dauerhaftung, Gleitfähigkeit bei der Auftragung oder dergleichen nach üblichen Methoden ermittelt werden (vgl. z.B. DE 101 48 077).

Bevorzugte Ausführungsformen der Erfindung werden auch in den Ansprüchen beschrieben, die hier durch Bezugnahme aufgenommen werden.

Die nachfolgenden Beispiele dienen der Illustration der Erfindung, ohne ihren Umfang einzuschränken. Prozentangaben beziehen sich jeweils auf Gewichtsprozente der Klebemasse mit allen Inhaltskomponenten, wenn nicht anders angegeben.

### Beispiel 1: Herstellung einer Klebemasse mit einer Polyurethan/Polyacrylat-Hybriddispersion, resultierende Klebemasse und Klebestift:

Eine Polyurethan/Polyacrylat-Hybriddispersion (Hybridur^{®} der Firma Air Products) (78 Gew.-% einer Hybriddispersion mit (hier bezogen nur auf die Hybriddispersion) 40 % Festkörperanteil) wird mit 5,2 Gew.-% Stearinsäure und 7,8 Gew.-% Wasser auf 65 bis 90°C erwärmt. Dann wird bei der genannten Temperatur mit einem leichten stöchiometrischen Überschuss gegenüber den Carboxygruppen der Stearinsäure an wässriger Natronlauge (8,7 Gew.-%) die resultierende Mischung neutralisiert, wobei ein Teil der Natronlauge auch schon vorab der Dispersion zugegeben werden kann. Die erhaltene Dispersion wird dann homogenisiert. Nach dem Abkühlen in einer Form wird eine stiftförmige Klebemasse erhalten. Diese wird in eine Hülse mit Drehmechanik zum Herausschieben des Stiftes am unteren Ende eingeführt und die Hülse am oberen Ende mit einem Deckel verschlossen, so dass ein fertiger Klebestift resultiert.

### Beispiel 2: Anwendung und Prüfung der Eigenschaften eines Klebestiftes nach Beispiel 1:

Abbindezeit: Zur Bestimmung der Abbindezeit werden von Hand Verklebungen an Papierstreifen (ca. 2 x 30 cm, säurefreies Kopierpapier 80 g/cm²) durchgeführt. Der Stift wird unter mäßigem Druck durch einmaliges Abreiben auf einen Streifen aufgetragen, sofort mit einem zweiten Streifen verklebt und gleichmäßig angedrückt. Die Papierstreifen werden nun langsam auseinandergezogen. Als Abbindezeit gilt der Zeitpunkt, an dem sich die Papierstreifen nur noch durch Papierausriss trennen lassen.

Zugscherfestigkeit: Standardprüfkörper der Fa. Rocholl aus Buchenholz bzw. Buchenholz/PVC werden überlappend verklebt. Die Überlappung beträgt 20 x 25 mm. Die Auftragung erfolgt durch einseitiges einmaliges Bestreichen eines Prüfkörpers und sofortiges Verkleben mit dem zweiten Prüfkörper. Nach 7 Tagen wird die Zugfestigkeit durch eine Universalzugprüfmaschine mit einer Zuggeschwindigkeit von 50 mm/min ermittelt.

Gemäß Beispiel 1 werden nach gleicher Vorgehensweise Klebestifte aus einer erfindungsgemäßen Hybriddispersion und einer Polyurethandispersion hergestellt und hinsichtlich Abbindezeit und Zugfestigkeit miteinander verglichen. Hierbei ergeben sich folgende Resultate:

| Messgröße | Hybrid-Klebestift | Polyurethan-Klebestift |
|---|---|---|
| Abbindezeit [s] | 20 | 25 |
| Zugscherfestigkeit [Mpa] Buche-Buche | 1,7 | 1,6 |
| Zugscherfestigkeit [Mpa] Buche-PVC | 1,4 | 1,0 |

Somit lassen sich mit dem erfindungsgemäßen Hybrid-Klebestift eine verkürzte Abbindezeit und eine verbesserte Zugscherfestigkeit gegenüber dem Polyurethanstift feststellen.

## Patentansprüche

1. Klebestift mit einer Klebemasse, die ein oder mehrere Gerüstsubstanzen und eine Klebekomponente umfasst, **dadurch gekennzeichnet, dass** es sich bei der Klebekomponente um eine Polyurethan/Polyacrylat-Hybriddispersion handelt.

2. Klebestift nach Anspruch 1 mit einer Klebemasse, welche noch ein oder mehrere weitere Zusätze und/oder Hilfsmittel beinhaltet.

3. Klebestift nach einem der Ansprüche 1 oder 2 mit einer Klebemasse, welche als weitere Zusätze und/oder Hilfsmittel ein oder mehrere ausgewählt aus der Gruppe, die Abriebmittel, Pigmente, Additive, Entschäumer, Farbstoffe, Geruchsverbesserer, Schmiermittel, Weichmacher, Feuchtigkeitsregulatoren, weitere Polymere, insbesondere Tackifier, in erster Linie Polyvinylpyrrolidon, und/oder Haftharze enthält.

4. Klebestift nach einem der Ansprüche 1 bis 3, wobei in der Klebemasse, bezogen auf deren Gewicht, der Gewichtsanteil der Gerüstsubstanzen bei 1 bis 40 Gew.-%, vorzugsweise bei 2 bis 25 Gew.-%, der Anteil der Polyurethan/Polyacrylat-Hybriddispersion (einschließlich Lösungsmittel, vorzugsweise Wasser) bei 5 bis 98 Gew.-%, vorzugsweise bei 30 bis 90 Gew.-%, wobei der Anteil der Feststoffe in der Polyurethan/Polyacrylat-Hybriddispersion bei 5 bis 75 Gew.-%, vorzugsweise bei 20 bis 60 Gew.-% liegt, und der Anteil der ein oder mehreren weiterer Zusätze und/oder Hilfsmittel bei jeweils bis zu 5 Gew.-%, vorzugsweise insgesamt bei bis zu 25 Gew.-% liegt.

5. Klebestift nach einem der Ansprüche 1 bis 4, **dadurch gekennzeichnet, dass** er außer Wasser kein anderes Lösungsmittel beinhaltet.

6. Klebestift nach einem der Ansprüche 1 bis 5, **dadurch gekennzeichnet, dass** die Polyurethan/Polyacrylat-Hybriddispersion durch Reaktion von Polyurethandispersionen mit polymerisierenden Polyacrylatvorstufen hergestellt ist.

7. Klebestift nach einem der Ansprüche 1 bis 5, **dadurch gekennzeichnet, dass** die Polyurethan/Polyacrylat-Hybriddispersion durch zusätzliche Polymerisierung von Polyurethan-Präpolymeren mit weiteren Polyurethanvorstufen und parallel ablaufende Polymerisation von Polyacrylatvorstufen hergestellt ist.

8. Verfahren zur Herstellung einer Klebemasse für einen Klebestift nach einem der Ansprüche 1 bis 7, **dadurch gekennzeichnet, dass** man eine Polyurethan/Polyacrylat-Hybriddispersion gegebenenfalls ein oder mehrere weitere Zusätze und/oder Hilfsstoffe vermischt und auf erhöhte Temperatur bringt, beispielsweise im Bereich von 50 °C bis unterhalb der Siedetemperatur des Gemisches, vorzugsweise im Bereich von 50 bis 90 °C, bringt, bis eine gleichmäßige Mischung entstanden ist, und anschließend zu dieser Mischung die Gerüstsubstanzen, oder Vorstufen davon, zugibt und die Mischung homogenisiert und abkühlen lässt.

9. Verfahren zur Herstellung eines Klebestifts, welches die Herstellung einer Klebemasse nach Anspruch 8 beinhaltet und deren Überführung in Hülsen mit üblichen Vorschubmechanismen, die durch Deckel verschließbar sein können.

10. Verwendung eines Klebestifts nach einem der Ansprüche 1 bis 8 zum Verkleben von Materialien und/oder Gegenständen, wobei die Klebemasse aus dem Klebestift auf ein oder mehrere Stellen der Materialien und/oder Gegenstände aufgebracht und die zu verklebenden Materialien oder Gegenstände über mindestens eine solche Auftragstelle miteinander in Kontakt gebracht werden.

## Claims

1. Adhesive stick having an adhesive mass which comprises one or more structural substances and an adhesive component, **characterised in that** the adhesive component is a polyurethane/polyacrylate hybrid dispersion.

2. Adhesive stick according to claim 1, having an adhesive mass which also includes one or more further additives and/or auxiliary agents.

3. Adhesive stick according to one of claims 1 or 2, having an adhesive mass which comprises as further additives and/or auxiliary agents one or more selected from the group comprising rub-off agents, pigments, additives, antifoams, dyes, odour improvers, lubricants, plasticisers, moisture regulators, further polymers, especially tackifiers, primarily polyvinylpyrrolidone, and/or adhesive resins.

4. Adhesive stick according to one of claims 1 to 3, wherein in the adhesive mass, based on the weight thereof, the content of structural substances, by weight, is from 1 to 40 % by weight, preferably from 2 to 25 % by weight, the content of polyurethane/polyacrylate hybrid dispersion (including solvents, preferably water) is from 5 to 98 % by weight, preferably from 30 to 90 % by weight, the content of solids in the polyurethane/polyacrylate hybrid dispersion being from 5 to 75 % by weight, preferably from 20 to 60 % by weight, and the content of the one or more further additives and/or auxiliary agents being, in each case, up to 5 % by weight, preferably in total up to 25 % by weight.

5. Adhesive stick according to one of claims 1 to 4, **characterised in that** it comprises no other solvent except water.

6. Adhesive stick according to one of claims 1 to 5, **characterised in that** the polyurethane/polyacrylate hybrid dispersion is produced by reaction of polyurethane dispersions with polymerising polyacrylate precursors.

7. Adhesive stick according to one of claims 1 to 5, **characterised in that** the polyurethane/polyacrylate hybrid dispersion is produced by additional polymerisation of polyurethane prepolymers with further polyurethane precursors and, taking place in parallel, polymerisation of polyacrylate precursors.

8. Method of producing an adhesive mass for an adhesive stick according to one of claims 1 to 7, **characterised in that** a polyurethane/polyacrylate hybrid dispersion, optionally one or more further additives and/or auxiliary substances, is mixed together and brought to an elevated temperature, for example in the range from 50°C to below the boiling point of the mixture, preferably in the range from 50 to 90°C, until a uniform mixture has formed, and subsequent to that mixing the structural substances or precursors thereof are added, and the mixture is homogenised and allowed to cool.

9. Method of producing an adhesive stick, comprising the production of an adhesive mass according to claim 8 and transfer thereof into sleeves having customary advancing mechanisms, which can be closable by covers.

10. Use of an adhesive stick according to one of claims 1 to 8 in the adhesive bonding of materials and/or articles, the adhesive mass being applied from the adhesive stick to one or more locations on the materials and/or articles and the materials or articles to be adhesively bonded being brought into contact with one another by way of at least one such application location.

## Revendications

1. Bâton de colle, comprenant une composition ou masse de colle qui comprend une ou plusieurs substances de structure et un composant de colle, **caractérisé en ce qu'**il s'agit concernant le composant de colle d'une dispersion hybride de polyuréthane/polyacrylatc.

2. Bâton de colle selon la revendication 1, comprenant une composition ou masse de colle qui contient encore un ou plusieurs autres additifs et/ou agents auxiliaires.

3. Bâton de colle selon l'une des revendications 1 ou 2, comportant une composition ou masse de colle qui contient en tant qu'additifs et/ou agents auxiliaires un ou plusieurs composants sélectionnés dans le groupe des agents améliorant l'odeur abrasifs, des pigments, des additifs, des agents antimousse, des colorants, des agents odorants, des lubrifiants, des plastifiants, des régulateurs d'humidité, d'autres polymères, en particulier des agents poisseux, en premier lieu de la polyvinylpyrrolidone, et/ou des résines adhésives.

4. Bâton de colle selon l'une des revendications 1 à 3, dans lequel, dans la composition ou masse de colle, sur la base de son poids, la fraction en poids des substances de structure est comprise entre 1 et 40 % en poids, de préférence entre 2 et 25 % en poids, la fraction de la dispersion hybride de polyuréthane/polyacrylate (y compris le solvant, de préférence de l'eau) est comprise entre 5 et 98 % en poids, de préférence entre 30 et 90 % en poids, où la fraction des solides dans la dispersion hybride de polyuréthane/polyacrylate est comprise entre 5 et 75 % en poids, de préférence entre 20 et 60 % en poids, et la fraction du ou des autres additifs et/ou agents auxiliaires va jusqu'à 5 % en poids respectivement, et de préférence au total jusqu'à 25 % en poids.

5. Bâton de colle selon l'une des revendications 1 à 4, **caractérisé en ce qu'**il ne contient aucun autre solvant que l'eau.

6. Bâton de colle selon l'une des revendications 1 à 5, **caractérisé en ce que** la dispersion hybride de polyuréthane/polyacrylate est préparée par réaction de dispersions de polyuréthane avec des précurseurs de polyacrylate polymérisants.

7. Bâton de colle selon l'une des revendications 1 à 5, **caractérisé en ce que** la dispersion hybride de polyuréthane/polyacrylate est préparée par polymérisation supplémentaire de pré-polymères de polyuréthane avec d'autres précurseurs de polyuréthane, et par polymérisation, exécutée en parallèle, de précurseurs de polyacrylate.

8. Procédé de fabrication d'une composition ou masse de colle pour bâton de colle selon l'une des revendications 1 à 7, **caractérisé en ce que** l'on mélange une dispersion hybride de polyuréthane/polyacrylate, éventuellement avec un ou plusieurs autres additifs et/ou agents auxiliaires, et que l'on porte à une température élevée, par exemple dans la gamme allant de 50°C à moins de la température d'ébullition du mélange, de préférence dans la gamme allant de 50 à 90 °C, jusqu'à ce que se forme un mélangé homogène, puis **en ce que** l'on ajoute à ce mélange les substances de structure, ou leurs précurseurs, puis que l'on homogénéise et laisse refroidir ce mélange.

9. Procédé de fabrication d'un bâton de colle qui contient la fabrication d'une composition ou masse de colle selon la revendication 8 et son transfert dans des tubes équipés de mécanismes usuels d'avance, qui peuvent être fermés par un couvercle.

10. Utilisation d'un bâton de colle selon l'une des revendications 1 à 8 pour coller des matériaux et/ou des objets, dans laquelle la composition de colle est appliquée depuis le bâton de colle sur un ou plusieurs emplacements des matériaux et/ou des objets, et les matériaux et/ou les objets à coller sont mis en contact ensemble par au moins un tel point d'application.
